# FASCICULE DE BREVET EUROPEEN

(11) **EP 0 688 539 B1**
(45) Date de publication et mention de la délivrance du brevet: **25.08.1999**
(21) Numéro de dépôt: 95107317.0
(22) Date de dépôt: 15.05.1995
(51) Int. Cl.: A61C 1/08

(54) **Pièce à main dentaire motorisée munie d'un accessoire électrique tel qu'un éclairage**
Zahnärtzliches Handstück mit einem Antrieb und mit elektrischem Zubehör, vorzugsweise Belichtungsvorrichtung
Motorized dental hand piece with electrical accessory such as lighting device

(30) Priorité: 26.05.1994 FR 9406386
(43) Date de publication de la demande: 27.12.1995
(73) Titulaire: BIEN-AIR SA, CH-2504 Bienne (CH)
(72) Inventeur: Mosimann, Vincent, CH-2533 Evilard (CH)
(74) Mandataire: Patry, Didier Marcel Pierre

(56) Documents cités:
- EP-A- 0 254 215
- EP-A- 0 296 444
- CH-A- 569 467
- DE-A- 2 730 504
- US-A- 3 109 238

## Description

La présente invention concerne un instrument dentaire, tel qu'une pièce à main, comportant un organe électrique auxiliaire, notamment une lampe d'un dispositif d'éclairage.

Plus particulièrement, cette invention concerne un instrument dentaire du type susmentionné comprenant un moteur électrique sans collecteur, destiné à l'entraînement d'un outil.

Les instruments dentaires classiques, et notamment les pièces à main comportent, à leur partie arrière, un raccord d'alimentation dans lequel sont logés des fils de raccordement électrique devant relier le moteur et la lampe susmentionnée à une source. Dans ce raccord sont de plus intégrés des tuyaux de passages des fluides permettant notamment le refroidissement du moteur électrique et de la surface de travail.

La liaison entre ce raccord arrière et la partie complémentaire de la pièce à main peut être avantageusement tournante, pour permettre au praticien d'orienter cette pièce dans toutes les positions sans être gêné par la torsion du cordon réunissant les différentes alimentations. Dès lors, dans ce raccord tournant, la liaison électrique entre les fils venant de la source d'alimentation et les fils connectés respectivement au moteur et à la lampe se fait par l'intermédiaire de pistes annulaires métalliques espacées axialement sur la longueur du raccord et coopérant avec des contacts frottants. Ainsi, les raccords connus voire normalisés comportent quatre voies pour les fluides et deux ou quatre pistes pour l'alimentation électrique. De tels agencements ont été commercialisés par la société Bien-Air SA, sous la référence "Isolite".

En outre, ces pièces à main sont pourvues d'un moteur électrique du type à collecteurs qui a besoin d'être fortement refroidi. Ainsi, on ne peut pas enfermer ce moteur à l'intérieur d'un carter étanche, car il est indispensable de lui associer une circulation d'air pour l'évacuation de la chaleur produite vers l'extérieur.

Cependant, la pratique de la chirurgie dentaire nécessite de plus en plus l'utilisation d'instruments, et notamment de pièces à main qui peuvent être stérilisés.

Cette stérilisation doit désormais pouvoir être effectuée non seulement au niveau de l'outil, mais aussi de façon plus large pour les autres parties de l'instrument, y compris son moteur.

Dès lors, et comme il ressort du document EP 0 254 215 on a cherché à incorporer dans ces pièces à main des moteurs sans collecteur qui peuvent subir ces traitements de stérilisation, tout en conservant le dispositif d'éclairage indispensable à l'observation de la zone de travail.

Or, l'intégration d'un moteur électrique sans collecteur associé à un dispositif d'éclairage nécessite de prévoir au minimum cinq fils d'alimentation, à savoir trois pour les bobines et deux pour l'ampoule, ce qui augmente d'autant le nombre de pistes et de contacts électriques dans le raccord tournant.

Une augmentation du nombre de pistes dans ce raccord tournant augmente la longueur du raccord, ce qui rend alors l'appareil moins pratique à l'utilisation.

L'invention a donc pour but de fournir un instrument dentaire qui comporte à la fois un moteur électrique et un organe électrique dit auxiliaire (par exemple une lampe d'un dispositif d'éclairage) et qui ne nécessite qu'un nombre réduit de fils de liaison électrique afin de réduire d'autant le nombre de pistes et de contacts frottants dans le raccord.

L'invention a donc pour objet un instrument dentaire comportant un organe électrique auxiliaire, tel qu'une lampe d'un dispositif d'éclairage, et un moteur électrique sans collecteur ayant des bobines d'excitation électromagnétique, ledit organe électrique et lesdites bobines ayant des bornes d'alimentation pouvant être reliées électriquement à un circuit de commande, cet instrument étant caractérisé en ce que ledit organe électrique est relié, par l'une de ses bornes, à au moins l'une des bornes d'alimentation des bobines précitées.

Selon une caractéristique particulière de l'invention, la borne dudit organe électrique est reliée, via une dérivation, à une borne de toutes les bobines d'excitation.

Selon encore une autre caractéristique, cet instrument comporte des diodes interposées entre ladite dérivation et respectivement les bornes des bobines connectées à ladite dérivation.

Mais d'autres caractéristiques et avantages de l'invention apparaîtront plus clairement à la lecture de la description des modes de réalisation qui suivent, donnés ici à titre d'exemple en combinaison avec les dessins annexés, dans lesquels :
- La figure 1 représente le schéma d'un circuit électronique de commande, associé aux bobines d'un moteur électromagnétique sans collecteur et à une lampe de la pièce à main selon l'invention;
- La figure 2 est un diagramme représentant les séquences d'alimentation des bobines du moteur de la figure 1, ainsi que l'alimentation périodique de la lampe de cette figure; et
- Les figures 3 et 4 sont des vues similaires aux figures 1 et 2 mais représentant respectivement un schéma électrique et un diagramme de fonctionnement d'un deuxième mode de réalisation selon l'invention.

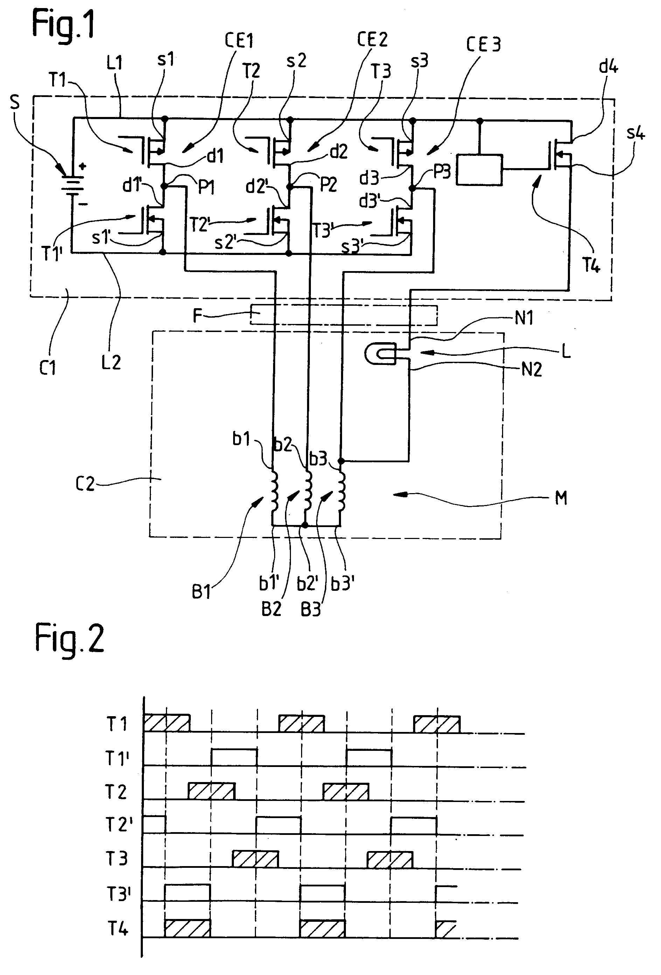

En se référant désormais à la figure 1, on décrira ci-après le schéma électrique d'un circuit de commande référencé C1 qui est associé à un circuit électrique C2 comportant des bobines d'excitation électromagnétique B1, B2 et B3 montées sur un stator (non représenté) d'un moteur électromagnétique sans collecteur M. On remarquera aussi que le circuit C2 comporte une lampe L constituant des moyens d'illumination d'un dispositif d'éclairage de la pièce à main selon l'invention. La lampe L qui est ici un organe électrique auxiliaire de l'instrument selon l'invention comporte des bornes N1 et N2.

Les deux circuits C1 et C2 sont reliés entre eux par des pistes de connexion annulaires associées à des contacts frottants d'un raccord par exemple tournant F, ces moyens de connexion étant représentés ici en traits interrompus pour faciliter la compréhension du dessin.

On comprend donc que le circuit C1 est logé dans une partie fixe, faisant partie d'un unit dentaire ou d'un câble d'alimentation (non représenté), tandis que le circuit C2 et ses composants sont intégrés dans une partie, par exemple tournante solidaire de la pièce à main ou uniquement du moteur si celui-ci a un accouplement amovible avec le corps de la pièce à main.

Bien entendu, d'autre accouplements amovibles peuvent être prévus à d'autres points notamment du circuit C2, ces accouplements n'étant pas ici représentés.

Le circuit de commande C1 comporte une source d'alimentation en tension référencée S représentée ici de façon très simplifiée, et qui comporte les éléments nécessaires pour la scrutation et la commande du présent moteur (sans collecteur et à trois bobines) référencé M. A cette source S sont reliées deux lignes d'alimentation L1 et L2 correspondant respectivement aux lignes d'alimentation positive (+) et négative (-) du circuit C1.

Entre ces deux lignes d'alimentation respectivement positive L1 et négative L2 sont interposés des couples d'interrupteurs électroniques CE1 à CE3 qui peuvent être pilotés par un signal de forme délivré par un circuit oscillateur et un circuit logique, ici non représentés.

Comme on peut le voir, chaque couple d'interrupteurs CE1 à CE3 présente une structure identique.

Plus particulièrement, chaque couple d'interrupteurs CE1 à CE3 comporte deux interrupteurs électroniques (respectivement T1, T1'; T2, T2' et T3, T3') constitués ici par des transistors classiques. Les premiers transistors T1, T2, T3 (ici du type p) qui sont liés à la ligne d'alimentation positive L1 ont leur source s1, s2 et s3 reliée à cette ligne positive L1, tandis que les drains d1, d2 et d3 de ces premiers transistors sont reliés respectivement aux drains d1', d2' et d3' des seconds transistors T1', T2' et T3' (ici du type n) auxquels ils sont associés.

On remarquera que ces premiers et seconds transistors sont couplés deux à deux en série entre les lignes L1 et L2. Dès lors, les sources s1', s2' et s3' appartenant aux seconds transistors T1', T2' et T3' sont reliées à la ligne d'alimentation négative L2.

Par ailleurs, les bobines B1, B2 et B3 comportent respectivement deux bornes de connexion b1, b1'; b2, b2' et b3, b3'. Les bornes dites libres b1, b2 et b3 sont reliées au circuit C1 par l'intermédiaire des pistes et des contacts du raccord F.

Les bobines d'excitation électromagnétique B1, B2 et B3 sont reliées selon un montage classique en étoile si bien qu'elles sont liées entre elles par une de leur borne, à savoir les bornes b1', b2' et b3' qui forment une ligne neutre du circuit électrique C2.

Comme on le voit sur la figure 1, les trois bobines d'excitation électromagnétique B1, B2 et B3 sont reliées respectivement aux couples d'interrupteurs électroniques CE1, CE2 et CE3 par l'intermédiaire des bornes libres b1, b2 et b3.

Plus particulièrement, cette liaison est réalisée via des points de connexion p1, p2 et p3 disposés respectivement entre les deux transistors associés des couples d'interrupteurs CE1 à CE3. On remarque en outre que ces points de connexion p1, p2 et p3 sont respectivement reliés directement aux drains d1, d1'; d2, d2' et d3, d3' de ces transistors de commande.

Par conséquent, et comme on le constate à la figure 2, la bobine d'excitation électromagnétique B1 est alimentée électriquement et elle fournit un flux électromagnétique lorsque le transistor T1 est rendu conducteur par le circuit logique, non représenté, et lorsque ce transistor relie la borne b1 à la ligne d'alimentation positive L1 du circuit C1. Il en est de même pour les deux autres bobines B2 et B3 qui sont excitées lorsque les transistors T2 et T3 sont rendus respectivement conducteurs. On constate donc qu'en rendant conducteur de façon successive les transistors T1, T2 et T3 (les transistors associés T1', T2' et T3' étant bloqués) on fournit aux bobines d'excitation électromagnétique B1, B2 et B3 une alimentation alternative triphasée avec un décalage de phase permettant la création d'un champ tournant pouvant activer de façon voulue le rotor (non représenté) du moteur M équipant la pièce à main selon l'invention. On notera que lors de l'alimentation du moteur M, au moins l'une des bobines est mise à la masse via le deuxième transistor du couple de transistors correspondant.

On précisera ici que les transistors du circuit C1 sont des transistors MOS mais que ceux-ci pourraient être remplacés par d'autres moyens électroniques remplissant la même fonction, tels que des transistors bipolaires. De même, en ayant recours à des moyens électriques classiques, ces transistors pourraient même être remplacés par des interrupteurs électriques, ici non représentés.

Comme on le voit sur la figure 1, le circuit de commande C1 comporte en outre un quatrième interrupteur électronique référencé T4 dont le drain d4 est relié à la ligne d'alimentation positive L1, tandis que sa source s4 est reliée à la borne d'alimentation N1 de la lampe L. Le transistor T4 peut être piloté par un régulateur R de même relié à la ligne d'alimentation positive L1, pour commander l'activation de la lampe L.

De façon avantageuse, l'autre borne N2 de la lampe L est reliée électriquement à la borne d'alimentation b3 de la bobine B3, cette connexion pouvant bien entendu être faite avec n'importe laquelle des bobines du moteur.

Dès lors, et comme on le constate sur la figure 2, lorsque le transistor T3' est rendu conducteur (le transistor associé T3 étant bloqué) la borne N2 de la lampe L est reliée à la ligne d'alimentation négative L2 du circuit C1 ce qui fait circuler un courant d'alimentation dans la lampe L puisque son autre borne N1 est reliée, via le transistor T4, à la ligne d'alimentation positive L1, le régulateur R pilotant alors en phase la fermeture de l'interrupteur constitué par le transistor T4.

Bien entendu, on constate sur la figure 2 que la lampe L n'est pas alimentée en permanence.

On notera que la fréquence d'alimentation de l'ampoule L est dictée par la vitesse de rotation du moteur M et par son nombre de bobines, ce qui a pour résultat de rendre perceptible visuellement les séquences d'alimentation de l'ampoule lorsque la vitesse du moteur est basse.

Toutefois, on comprend qu'en choisissant de façon judicieuse un moteur fonctionnant à des vitesses élevées, on peut éviter que les flashes de la lampe L ne soient alors perceptibles par l'utilisateur. On comprend que cette solution est particulièrement simple car elle permet d'éviter l'implantation d'élément électronique dans la pièce à main.

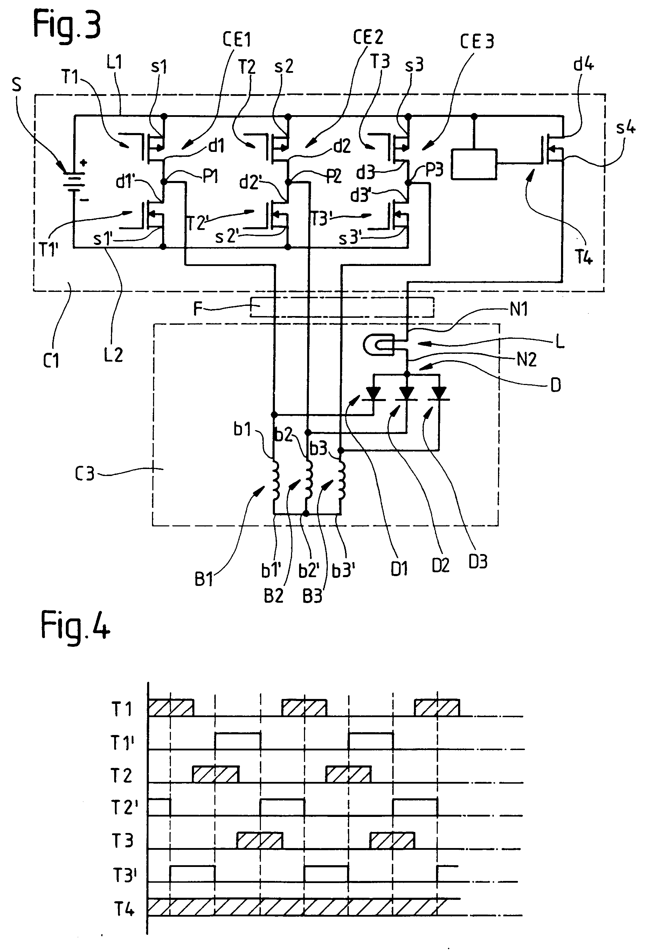

En se référant désormais aux figures 3 et 4, on décrira ci-après un deuxième mode de réalisation du circuit de la pièce à main selon l'invention.

Sur cette figure 3, le circuit C1 est identique au circuit C1 de la figure 1 et ne sera par conséquent pas décrit de façon plus détaillée.

Il en est de même pour la structure du moteur M et de la lampe L.

Dans ce mode de réalisation, le circuit C3 comporte de plus une dérivation D qui est reliée, d'une part, à la borne N2 de la lampe L, et, d'autre part aux bornes libres b1, b2 et b3 des bobines d'excitation électromagnétique B1, B2 et B3. Entre la dérivation D et les bornes b1, b2 et b3 sont interposées des diodes D1, D2 et D3.

Comme on peut donc le constater à la figure 4, lorsque les transistors respectivement T1', T2' et T3' sont rendus conducteurs (et que les transistors associés T1, T2 et T3 sont bloqués), la borne N2 de la lampe L est connectée à la ligne d'alimentation négative L2, via la dérivation D et via les diodes D1, D2 et D3. Ainsi, cette connexion de l'une des bornes de la lampe L à l'une des bornes b1, b2 et b3 des trois bobines d'excitation électromagnétique B1, B2 et B3 fournit une alimentation électrique constante à la lampe L qui peut être alors en permanence allumée, sans dépendre des vitesses de rotation basses du moteur et de son nombre de bobines.

On comprend donc de ce qui vient d'être décrit qu'on a fourni une pièce à main dentaire, et plus particulièrement un circuit électrique de commande et d'alimentation d'une lampe et d'un moteur électromagnétique sans collecteur d'une telle pièce, dont le raccord ne présente que quatre fils d'alimentation, trois étant destinés à l'alimentation des trois bobines B1, B2 et B3 tandis qu'un seul est destiné à la lampe L, cette lampe L profitant par ailleurs pour sa connexion sur la ligne d'alimentation négative d'un des fils (ou bornes) d'alimentation de ces trois bobines.

On précisera que l'instrument selon l'invention s'applique à l'implantologie et à la microchirurgie.

## Revendications

1. Instrument dentaire comportant un organe électrique auxiliaire (L), tel qu'une lampe d'un dispositif d'éclairage, et un moteur électrique (M) sans collecteur ayant des bobines d'excitation électromagnétique (B1,B2,B3), ledit organe électrique (L) et lesdites bobines (B1,B2,B3) ayant des bornes d'alimentation pouvant être reliées électriquement à un circuit de commande (C1), caractérisé en ce que ledit organe électrique (L) est relié, par l'une de ses bornes, à au moins l'une des bornes d'alimentation des bobines précitées

2. Instrument selon la revendication 1, caractérisé en ce que ladite borne dudit organe électrique (L) est reliée, via une dérivation (D), à l'une des bornes de toutes les bobines d'excitation (B1,B2,B3), des diodes (D1,D2,D3) étant interposées entre ladite dérivation (D) et respectivement les bornes des bobines qui sont connectées à ladite dérivation.

3. Instrument selon la revendication 1 ou 2, caractérisé en ce que ledit circuit de commande (C1) comporte des interrupteurs (T1,T2,T3,T1',T2',T3') pour commander le passage d'un courant d'alimentation vers lesdites bobines, ces interrupteurs étant couplés deux-à-deux, en série, entre des lignes (L1,L2) d'une source d'alimentation (S), lesdites bobines d'excitation (B1,B2,B3) étant respectivement reliées audit circuit de commande (C1) via des points de connexion (p1,p2,p3) disposés chacun entre deux des interrupteurs en série d'un couple précité.

4. Instrument selon l'une quelconque des revendications précédentes, caractérisé en ce qu'il s'applique à l'implantologie.

5. Instrument selon l'une quelconque des revendications 1 à 3, caractérisé en ce qu'il s'applique à la microchirurgie.

## Claims

1. Dental instrument including an electric accessory element (L), such as a lamp of a lighting device, and an electric brushless motor (M) having electromagnetic excitation coils (B1, B2, B3), said electric element (L) and said coils (B1, B2, B3) having supply terminals able to be electrically connected to a control circuit (C), characterized in that said electric element (L) is connected, by one of its terminals, to at least one of the supply terminals of the aforecited coils.

2. Instrument according to claim 1, characterized in that said terminal of said electric element (L) is connected, via a branch (D), to one of the terminals of all the excitation coils (B1, B2, B3), diodes (D1, D2, D3) being inserted between said branch (D) and respectively the terminals of the coils which are connected to said branch.

3. Instrument according to claim 1 or 2, characterized in that said control circuit (C1) includes switches (T1, T2, T3, T1', T2', T3') for controlling the passage of a supply current to said coils, said switches being coupled in pairs, in series, between lines (L1, L2) of a power supply (S), said excitation coils (B1, B2, B3) being respectively connected to said control circuit (C) via connection nodes (p1, p2, p3) each arranged between two of switches in series of an aforecited pair.

4. Instrument according to any of the preceding claims, characterized in that it is applied to implantology.

5. Instrument according to any of claims 1 to 3, characterized in that it is applied to microsurgery.

## Patentansprüche

1. Dentalinstrument, das ein elektrisches Hilfsorgan (L) wie etwa eine Lampe einer Beleuchtungsvorrichtung sowie einen Elektromotor (M) ohne Kollektor mit elektromagnetischen Erregungsspulen (B1, B2, B3) enthält, wobei das elektrische Organ (L) und die Spulen (B1, B2, B3) Versorgungsanschlüsse besitzen, die mit einer Steuerschaltung (C1) elektrisch verbunden werden können, dadurch gekennzeichnet, daß das elektrische Organ (L) mit einem seiner Anschlüsse mit wenigstens einem der Versorgungsanschlüsse der genannten Spulen verbunden ist.

2. Instrument nach Anspruch 1, dadurch gekennzeichnet, daß der Anschluß des elektrischen Organs (L) über eine Abzweigung (D) mit einem der Anschlüsse sämtlicher Erregungsspulen (B1, B2, B3) verbunden ist, wobei zwischen die Abzweigung (D) und die entsprechenden Anschlüsse der Spulen, die mit der Abzweigung verbunden sind, Dioden (D1, D2, D3) geschaltet sind.

3. Instrument nach Anspruch 1 oder 2, dadurch gekennzeichnet, daß die Steuerschaltung (C1) Ein-/Aus-Schalter (T1, T2, T3, T1', T2', T3') enthält, um den Durchgang eines Versorgungsstroms zu den Spulen zu steuern, wobei diese Ein-/Aus-Schalter jeweils paarweise in Serie zwischen die Leitungen (L1, L2) einer Versorgungsquelle (S) geschaltet sind, wobei die Erregungsspulen (B1, B2, B3) über Anschlußpunkte (P1, P2, P3), die sich jeweils zwischen den zwei in Serie geschalteten Ein-/Aus-Schaltern eines obengenannten Paars befinden, mit der Steuerschaltung (C1) verbunden sind.

4. Instrument nach irgendeinem der vorangehenden Ansprüche, dadurch gekennzeichnet, daß es auf die Implantationstechnik angewendet wird.

5. Instrument nach irgendeinem der Ansprüche 1 bis 3, dadurch gekennzeichnet, daß es auf die Mikrochirurgie angewendet wird.
